# EUROPEAN PATENT SPECIFICATION

(11) **EP 1 874 998 B1**
(45) Date of publication and mention of the grant of the patent: **22.12.2010**
(21) Application number: 06750882.0
(22) Date of filing: 20.04.2006
(51) Int. Cl.: D21C 5/02

(54) **REMOVAL OF ORGANIC DEPOSITS FROM RECYCLED FIBERS USED FOR PRODUCING PAPER**
ENTFERNUNG ORGANISCHER ABLAGERUNGEN VON ALTPAPIERSTOFFEN AUS DER PAPIERHERSTELLUNG
ELIMINATION DE DEPOTS ORGANIQUES DE FIBRES RECYCLEES UTILISEES POUR PRODUIRE DU PAPIER

(30) Priority: 20.04.2005 US 673244 P
(43) Date of publication of application: 09.01.2008
(73) Proprietor: Dow Corning Corporation, Midland MI 48686-0994 (US)
(72) Inventor: FRANCIS, John G., Glynneath, Neath SA11 5ED (GB); PERRY, Donna M., Llandaff, Cardiff CF5 2AF (GB); FOURNIER, Frances, M., Birch Run, Michigan 48415 (US); DE BUYL, Francois, B-1560 Hoeilaart (BE); VAN DEN BERG, Elizabeth, B-1400 Nivelles (BE)
(74) Representative: Donlan, Andrew Michael
(86) International application number: PCT/US2006/014967
(87) International publication number: WO 2006/113896

(56) References cited:
- EP-A- 0 745 648
- WO-A-2004/011717
- US-A- 5 510 439
- US-A- 5 624 569
- US-B1- 6 179 957
- US-B1- 6 607 717

## Description

### BACKGROUND OF THE INVENTION

This invention is directed to a method of controlling and partially removing organic deposits, from paper pulp derived from recycled wastepaper stocks and resulting paper products which are ever increasingly being used in paper mills for producing paper.

A growing awareness in recent years of environmental damage caused by deforestation together with increasing energy costs has resulted in an increase in the recycling of many products including wastepaper. It is well known that the recycling of wastepaper is commercially viable and provides a significant beneficial impact on the conservation of trees (i.e. virgin fiber) and energy resources. The recycling of wastepaper is a commercial practice involving the collection and processing of wastepaper to generate a secondary or recycled fiber supply for the paper industry. Fibers in recycled paper not only differ from fibres in virgin pulp and original cellulose fibers by their physical and mechanical properties but also differ in their chemical composition because of changes within the fiber matrix caused by drying, aging, and repeated recycling processes as well as due to the presence of non-cellulosic, synthetic contaminants.

Of the synthetic contaminants, chemical contaminants are the most difficult to passivate, control and/or possibly remove during the paper making process. They include pressure sensitive adhesives (e.g., acrylics, vinyl-acetate, hot-melts and the like), inks, coloring agents, special coatings, internal additives, coating binders and plastic film residues and the like. For the conversion of wastepaper stock to recycled paper of acceptable quality, chemical contaminants such as the above must be thoroughly dispersed as small particles or preferably be removed. Hence pulp prepared from recycled paper stock is often referred to in the industry as "de-inked pulp (DIP)."

The recycled paper industry has developed a number of distinct grades of wastepaper called paper stocks that are defined by the fiber type and the degree of contamination. These include:- newsprint grades (standard, improved, telephone book directories),
magazine grades (wood containing uncoated, or wood containing coated papers for offset and rotogravure),
printing and writing grades (either wood containing uncoated and coated papers), and multiply board grades (box board with various layers de-inked or not ).

The value in the market place for each grade varies significantly as a function of their contaminant content. The wastepaper stock grades require substantial processing for contaminant removal prior to the production of a suitable recycled paper. The degree of required purity of the recycled pulp varies depending on the paper type being prepared, e.g., tissues for personal hygiene, tissues for industrial hygiene and cleaning, office paper for printing, newspapers or boards for packaging. Irrespective of the paper type being made, the resulting paper is required to meet appropriate quality levels which can entail the need for "specks" removal, brightness and/or softness (which has an influence on the choice of the recycled pulp purification method).

In conventional paper recycling methods, paper stock (i.e. the wastepaper) is pulped (i.e. disintegrated) by typically by mechanical agitation in an aqueous medium in order to initiate the preparation of recycled paper and to initiate the removal of contaminants present in the waste paper stock which dependent on the source of stock will include adhesives (e.g., acrylics, vinyl-acetate, hot-melts and the like) and inks. The result of the initial pulping of the waste paper is the formation of an aqueous slurry of paper fibres containing contaminants such as ink and adhesives dispersed throughout the slurry in particles of approximately 0.1 to 1000 µm. The resulting pulp undergoes a variety of treatment processes to remove contaminants. Dependent on the quality requirements of the end paper to be produced these may include, amongst other steps, one or more steps of each of the following:-
Cleaning
Screening (e.g. the physical removal of large sized contaminants by physical straining through a mesh or the like);
Flotation (in which the pulp is typically de-inked by any suitable de-inking process, such as the process described in WO2004/011717 which relies on flotation using an organo-modified siloxane component);
Dispersion;
Sedimentation; and
Drying and/or dewatering.

Typically none of the above stages are 100% successful for example adhesives, inks and associated contaminants are only partially removed by flotation methods and as such the resulting prepared paper will contain a degree of contamination due to the inability to exhaustively remove contaminants during pulp processing.

Mills producing paper from wastepaper stocks often face problems caused by the formation of deposits of, in particular, organic contaminants on various pieces of the equipment used in paper processing machinery, such as formation wires, presses, and cylinders and/or wires in the drying and/or dewatering apparatus. Problems associated with such deposits, include breaks in the resulting paper, paper defects (e.g., spots and holes), and loss of efficiency in drying and/or dewatering apparatus due to e.g. felt clogging and surface contamination by the adherence of contaminants to formation wires and dewatering equipment and other apparatus. As a consequence, these problems cause many shutdowns of paper making machinery and the need for regular cleaning of clogged equipment typically using solvents for chemical cleaning or doctor blade devices for mechanical removal of deposits. These shutdowns and paper quality problems have a direct effect on the productivity and the overall economy of board, paper and tissue producers using recycled pulp.

Whilst larger sized contaminants are usually successfully removed during pulp processing by screening, the contaminants causing deposits in the final drying and/or dewatering section of the pulping process used to prepare recycled paper typically originate from micrometer-size and/or colloidal contaminants present in the resulting processed pulp suspension that were not eliminated by screening and/or other decontamination steps performed during pulp processing. The deposits collected in the paper making machinery (wet and dry sections) are generally polymers formed as a result of the coalescence of the micron-size and colloidal contaminants present in the recycled fibers, particularly adhesive based materials as discussed above including those derived from pressure sensitive adhesive labels, book binders and board assembly in particular polyacrylate, hot-melt adhesive and polyvinyl acetate residues. Polyacrylate, polyvinyl acetate and hot-melt contaminants are often the main components of contaminants deposited on equipment involved in the drying and/or dewatering section of the paper making process.

The detrimental contaminant deposit formations are generally known in the industry as "stickies". Stickies may be classified into three categories, i.e., "macro stickies", "micro stickies", and "colloidal stickies". Macro stickies are solid and tacky contaminants rejected by a 100 µm slotted screen. Macro stickies are consequently considered to be larger than 100 µm in equivalent diameter and are relatively easily removed by mechanical screening. Micro stickies are also tacky particles, but have a size between 1 and 100 µm. Unlike macro stickies, which are retained on a 100 µm slotted screen, micro stickies pass through such screens and are consequently difficult to isolate selectively. Colloidal stickies are smaller than 1 µm, and are therefore considered to belong to a "dissolved and colloid fraction" of contaminants. Colloidal stickies are sometimes referred to as "potential stickies". Because of their size, colloidal stickies do not have detrimental impact, whilst they remain in a colloidal form. Colloidal stickies may however undergo destabilization by changes in the ionic strength of the aqueous pulp medium (e.g., presence of cationic polymers, and/or metallic ions such as calcium ions etc.) resulting in their precipitation, and the formation in some instances of tacky precipitates generally known in the industry as "secondary stickies".

Three families of chemical contaminants cover practically the entire population of micro stickies and colloidal stickies that can be found in (recycled) paper derived from wastepaper stocks. These consist of:-
(i) pressure sensitive acrylic based adhesives (PSA) often used as pressure sensitive adhesive for envelopes;
(ii) polyvinylacetate (PVAc) and residues of ethylvinylacetate (EVA) often used in packaging boards; and
(iii) hot melt styrene-butadiene-styrene (SBS) copolymers often used in binding books.

US Patent 5,527,431 (June 18, 1996), US Patent 5,560,832 (October 1, 1996), US Patent 5,589,075 (December 31, 1996), US Patent 5,597,490 (January 28, 1997), US Patent 5,624, 569 (April 29, 1997), and US Patent 5,679,261 (October 21, 1997), describe the use of compositions containing certain silanes in wastewater treatment, clarification of de-inking process water resulting from de-inked pulp (DIP) preparation, turbidity reduction, food processing waste treatment, and de-emulsification of oily wastewater, the compositions are water-soluble surface active silicon-containing polyelectrolyte copolymers, in particular, silicon-containing copolymers made by reacting non-silicon atom containing hydrophilic and hydrophobic organic monomers, including diallyl dimethyl ammonium halides such as diallyl dimethyl ammonium chloride, with vinylalkoxysilanes such as vinyltrimethoxysilane.

### BRIEF SUMMARY OF THE INVENTION

The invention is directed to a recycled paper product and to a method for making the same from wastepaper stock. A method of reducing deposition of contaminants during the preparation of recycled paper products and in said products, the method comprising the steps of
(a) pulping a wastepaper stock in an aqueous medium and
(b) processing pulp produced in step (a) to form recycled paper
**Characterised in that** during step(a) and/or step(b) an effective amount of one or more silicon containing material(s) selected from the group of:-
(i) an epoxy and/or glycidoxy functional silane, and/or
(ii) a quaternary ammonium functional silicone polymer,
(iii) a quaternary ammonium functional silicone polymer cross-linked by an organic
   epoxide
   and/or
(iv) an amino functional silane and/or
(v) an alkyl functional silane
Is added and interacts with said contaminants in the pulp thereby reducing deposition of said contaminants on pulp processing equipment and in the resulting paper product.

For the sake of this invention the paper product may comprise paper, tissue paper and or board materials.

The preferred amount of the additive is 0.01-10 percent by weight based on the dry weight of the wastepaper stock. In the case where two or more silicon containing materials are utilised as the additive the cumulative amount of additive remains in the range 0.01-10 percent by weight based on the dry weight of wastepaper stock and preferably is in a range 0.02-1.0 percent.

The inventors have, surprisingly and unexpectedly, identified that the addition of silicon containing material in accordance with the present invention significantly reduces the surface area of contaminants, hereafter referred to as "stickies" deposited on wires used in the drying and/or dewatering of the pulp, it appears that the interaction referred to above significantly reduces the adhesive strength of the stickies on metallic substrates such as those used during the drying steps in the paper making process. These and other features of the invention will become apparent from a consideration of the detailed description.

### DETAILED DESCRIPTION OF THE INVENTION

The present invention relates to all categories of adhesive contaminants generally referred to in the industry as "stickies"e.g., macro stickies, micro stickies and colloidal stickies, as hereinbefore described, typically originating from different adhesive and/or ink components present in wastepaper stock. Preferably the contaminants are micro stickies, colloidal stickies and mixtures thereof...

The silicon containing materials herein is selected from the group of:-
(i) an epoxy and/or glycidoxy functional silane, and/or
(ii) a quaternary ammonium functional silicone polymer, and/or
(iii) a quaternary ammonium functional silicone polymer cross-linked by an organic epoxide and/or
(iv) an amino functional silane and/or
(v) an alkyl functional silane.

It is believed by the applicants that the silicon containing materials may, enhance the effectiveness of coagulation and flocculation processes during the cleaning stage of the paper pulp, i.e., the removal of stickies, and/or the pacification of stickies in the finish of resulting recycled paper products. Passification of stickies is intended to mean the removal of the adhesive nature of the stickies thereby preventing them from depositing onto equipment or the resulting paper product.

Preferably the silicon containing material is soluble in the aqueous medium used in step (a) and interacts with the contaminants during step (a) (when the silicon containing material is present) and during step (b). Step (b) will typically involve one or more stages of the following cleaning, Screening, Flotation, Dispersion, Sedimentation, Drying and/or dewatering and any other standard pulp processing stages.

Silicon containing material may be introduced into the pulp at any point in time during step (a) and/or step (b), i.e. it may be introduced one or more times during step (a) alone or one or more times in step (b) alone or may be introduced during both step (a) and step (b) as preferred and dependent on the overall process being undertaken. Preferably when added during step (b) the silicon containing material is added at an addition point where sufficient shear mixing is applied to ensure interaction between the silicon containing materials and the stickies in order that passivation can occur. Most preferably however the addition during step (b) should occur prior to the pulp entering the paper machine where sheet or rolled paper etc. is formed.

The silicon containing material may be introduced into the pulp alone or in combination with other ingredients. One preferred additional ingredient which may be introduced either together with or separate from the silicon containing material is talc. Talc may be introduced simulataneously with, prior to or after introduction of the silicon containing material. Talc, has previously been used for controlling stickies in some recycled paper producing processes. However talc has only limited efficacy for controlling stickies, and causes handling problems for the user.

Pulp derived from wastepaper and processed as hereinbefore described may be combined with virgin pulp for the manufacture of papers, tissues or boards. The process in accordance with the present invention may be carried out in conjunction with the de-inking process described in W02004/011717, or indeed any other standard de-inking aid chemistry already used by paper mills.

The process in accordance with the present invention may be carried out at any suitable pH conditions, i.e., acidic, basic and neutral although approximately neutral conditions pH 7 (+ or - pH0.5) are preferred particularly over alkaline conditions which, whilst used in traditional de-inking methods cause water-soluble and/or colloidal solids and finely dispersed solids e.g., fillers, fine fibers and stickies to contaminate the process water.

Some examples of suitable epoxy or glycidoxy functional silanes (i) that can be used herein include 3-glycidoxypropyldimethylethoxysilane, 3-glycidoxypropylmethyldiethoxysilane, 3-glycidoxypropylmethyldimethoxysilane, 3-glycidoxypropyltriethoxysilane, 3-glycidoxypropyltrimethoxysilane, and epoxyhexyltriethoxysilane.

Suitable quaternary ammonium functional silicone polymer (iii) and the method of making the same are described in detail in US 6,787,603 as well as in US 6,482,969 and US 6,607,717. As described in these patents, generally, the quaternary ammonium functional silicone polymer in the form of an emulsion is prepared by reacting:-
an organic quaternary ammonium compound having epoxide groups or halohydrin groups in its molecule, with
a siloxane having amino groups in its molecule, in the presence of,
a surfactant.
The above three components are then dispersed in an aqueous polar phase

Some examples of organic quaternary ammonium compounds having epoxide groups are glycidyl trimethylammonium chloride and glycidyl trimethylammonium bromide; and some examples of organic quaternary ammonium compound having halohydrin groups are:
(3-chloro-2-hydroxypropyl)trimethylammonium chloride,
(3-chloro-2-hydroxypropyl)dimethyldodecylammonium chloride,
(3-chloro-2-hydroxypropyl)dimethyloctadecylammonium chloride,
(3-chloro-2-hydroxypropyl)trimethylammonium bromide,
(3-chloro-2-hydroxypropyl)dimethyldodecylammonium bromide, and
(3-chloro-2-hydroxypropyl)dimethyloctadecylammonium bromide.

The quaternary ammonium functional silicone polymer crosslinked by an organic epoxide (iv), and the method of making the polymer, are described in detail in International Publication Number WO 2004/103326, and in International Publication Number WO 2004/104013. As described in WO 2004/103326 and WO 2004/104013, the quaternary ammonium functional silicone polymer crosslinked by an organic epoxide in the form of an emulsion, is prepared by reacting the same components used above for the quaternary ammonium functional silicone polymer (E), with the addition of a crosslinking agent.

As noted in WO 2004/103326 and WO 2004/104013, the crosslinking agent is an organic epoxide containing at least two epoxy groups, i.e., diepoxide, including compositions such as ethylene glycol diglycidyl ether, diethylene glycol diglycidyl ether, polyethylene glycol diglycidyl ether, glycerine diglycidyl ether, triglycidyl ether, propylene glycol diglycidyl ether, butanediol diglycidyl ether; 1,2,3,4-diepoxybutane; 1,2,4,5-diepoxypentane; 1,2,5,6-diepoxyhexane; 1,2,7,8-diepoxyoctane; 1,3-divinylbenzene diepoxide; 1,4-divinylbenzene diepoxide; 4,4'-isopropylidene diphenol diglycidyl ether, and hydroquinone diglycidyl ether. Other polyglycidyl ethers of alkane polyols, polyglycidyl ethers of poly(alkylene glycols), diepoxy alkanes, diepoxy aralkanes, and polyphenol polyglycidyl ethers, can also be used.

### EXAMPLES

The following series of examples are set forth in order to illustrate the invention in more detail. The performance of six additives for reducing the deposition of stickies is shown in Example 1.

### Example 1

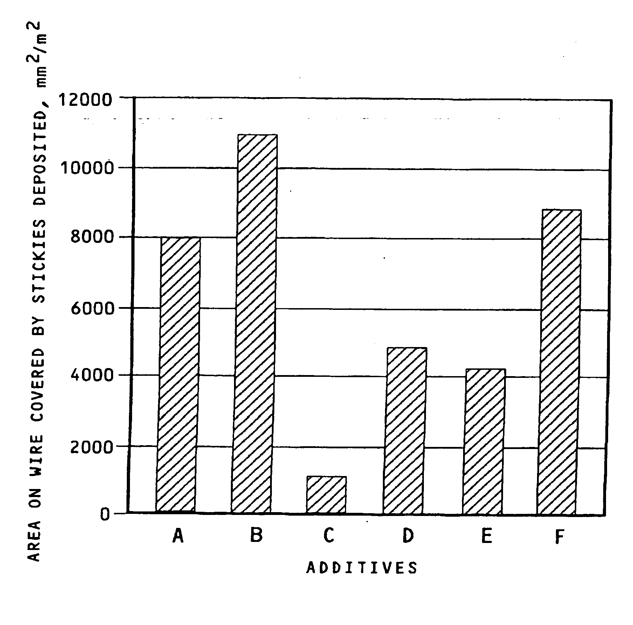

In this example, the starting material was a chemical virgin pulp containing as stickies about one percent by weight of adhesives. This material was pulped for 30 minutes. The pulp was then diluted to a concentration of 0.5 percent in water, and placed into a test tank. The additive compositions intended to reduce the amount of stickies were added and the pulp was agitated for 10 minutes. A wire was then placed in the tank, and the pulp was agitated for an additional 30 minutes. On completion of the test, the wire was removed, dried, weighed, and scanned, to assess the total surface area of stickies deposited on the wire. The results of the test are shown graphically in the single figure of drawing. In the graph, the less the height of the column, the better is the passivation effect of the stickies shown (i.e. stickies are prevented from depositing onto the wire by their interaction with the silicon containing materials).

The six additives A-F shown in the graphical representation are respectively, talc (A); aminoethylaminopropyltrimethoxysilane (B); 3-glycidoxypropyltrimethoxysilane (C); an emulsion containing a quaternary ammonium functional silicone polymer cross-linked by an organic epoxide (D); an emulsion containing a quaternary ammonium functional silicone polymer (E); and an emulsion containing a carboxyl functional silicone polymer (F).

As noted above, additive (D) is described in detail in WO 2004/103326 and WO 2004/104013. Additive (E) is described in detail in US Patent 6,787,603, US Patent 6,482,969, and US Patent 6,607,717.

It should be apparent from Table 1 below that additives C, D, and E, were the most efficient additives in pacifying stickies, compared to the other additives A, B, and F, at a concentration of one percent of the dry paper weight. When the example was repeated with recycled fiber in the presence of the same adhesives, again less deposit occurred, confirming that the presence of mineral fillers, inks, and other products in the recycled fiber, also resulted in passivation of the stickies.

**Table 1**

| Additive | Surface Area of wire covered by Contaminants (mm²/m²) |
|---|---|
| (A) Talc | 7850 |
| (B) aminoethylaminopropyltrimethoxysilane | 11150 |
| (C) γ-glycidoxypropyltrimethoxysilane | 1000 |
| (D) emulsion containing a quaternary ammonium functional silicone polymer cross-linked by an organic epoxide | 4800 |
| (E) emulsion containing a quaternary ammonium functional silicone polymer | 4390 |
| (F) emulsion containing a carboxyl functional silicone polymer | 8690 |

### Example 2 - Wire deposition testing from a pulp

In this series of examples a stickies deposition test was carried out using the following method:

An acrylic based pressure sensitive adhesives (PSA) was used as a model adhesive (Jackstad^{®} E115). The adhesive was applied to a paper comprising exclusively virgin fibres. The amount of PSA applied equated to 1 % of the dried fibre content (e.g., 1g PSA / 100g paper). The treated paper was then cut into small pieces to form a paper stock and introduced into a pulper (Lhomargy pulper) followed by preheated demineralised water (45°C) such that the concentration of fibres in water was 35 g/l (3.5% pulp consistency). The additives were then introduced in the amounts indicated in Table 2 and a pulping process was undertaken for a period of 20 minutes, whilst maintaining the temperature of the mixture at about 45°C. Subsequent to completion of the pulping step, the resulting pulp was diluted to a concentration of 10 g/l (1% pulp consistency) with additional hot demineralised water (45°C) and poured into a deposition tester of the type described by Delagoutte et al. in "Recent Advances in Paper Recycling - Stickies", Mahendra R Doshi Ed. Pub. 2002 by Doshi & associates Inc., page 135.

Wire, fixed on a suitable paddle, was then moved in an agitated mixture of the resulting diluted pulp for a period of 20 minutes after which the wire was removed, rinsed and dried and analysed for contaminant deposits thereon. Contaminant deposits on the wire were observed to be of black colour as a result of the coloration method used and the amount present was determined by image analysis. The results in Table 2 are provided as surface area of wire covered by contaminants (stickies) in square millimetres (mm²) per square meter (m²) of wire. Table 2 clearly shows the effectiveness of organosilanes, in particular glycidoxypropyltrialkoxy functional silanes for reducing the deposition of contaminants (stickies) on the wire in comparison to 1.0% talc given as comparative example.

**Table 2**

| Contaminant (1g per 100g of paper) | Additive | Surface Area of wire covered by Contaminants (mm²/m²) | Reduction of Surface Covered (%) |
|---|---|---|---|
| PSA | None | 2821 | 0 |
| PSA | γ-glycidoxypropyltrimethoxysilane (0.07%) | 907 | 68 |
| PSA | γ-glycidoxypropyltrimethoxysilane (0.1%) | 700 | 75 |
| PSA | γ-glycidoxypropyltrimethoxysilane (0.13%) | 509 | 82 |
| PSA | γ-glycidoxypropyltriethoxysilane (0.10%) | 220 | 92 |
| PSA | γ-glycidoxypropylmethyldimethoxysilane (0.10%) | 1279 | 55 |
| PSA | γ-glycidoxypropylmethyldiethoxysilane (0.10%) | 936 | 67 |
| PSA | methyltrimethoxysilane (0.10%) | 854 | 70 |
| PSA | γ-aminoethylaminopropyltrimethoxysilane (0.10%) | 863 | 69 |
| PSA | γ-aminopropyltrimethoxysilane (0.10%) | 948 | 66 |
| PSA | α-UNDECYL ω-HYDROXY POLY(ETHYLENE OXIDE), BRANCHED AND LINEAR 9% - Reaction product of DIMETHYL, METHYL(AMINOETHYLAMINOISOBUTYL ) SILOXANE with GLYCIDYL TRIMETHYLAMMONIUM CHLORIDE 22% - Water 61% (0.23%) | 1192 | 58 |
| PSA | - POLYOXYETHYLATED, C 11-14 ALCOHOLS 8% - Reaction product of DIMETHYL, METHYL (AMINOETHYLAMINOISOBUTYL) SILOXANE, with GLYCIDOXY SILOXANE and GLYCIDYL AMMONIUM CHLORIDE 27% - Water 61% | 989 | 65 |
| PSA | Talc (1.0%) - COMPARATIVE | 563 | 80 |

### Example 3 - Wire deposition testing during paper sheet formation

The same method was carried out as described in Example 2 to prepare the pulp. Subsequently, the resulting pulp was diluted to 1 g/l with demineralised water (45°C). A series of paper hand-sheets (10 - 15) were then prepared using same wire for each sheet. The wire collected deposits of contaminants (stickies) transferred from the hand-sheet(s) being produced. Drainage of the pulp can be either gravimetric or assisted using a water pump. As will be seen in Table 3 the amount of silane added (γ-glycidoxypropyltrimethoxysilane) was added in various amounts and comparative examples using two dosages of talc additive are provided.

**Table 3**

| Contaminant (1g per 100g of paper) | Additive | Surface Area of wire covered by Contaminant)s (mm²/m² | Reduction of Surface Covered (%) |
|---|---|---|---|
| PSA | None | 335 | 0 |
| PSA | γ-glycidoxypropyltrimethoxysilane (0.05%) | 46 | 86 |
| PSA | γ-glycidoxypropyltrimethoxysilane (0.10%) | 38 | 89 |
| PSA | γ-glycidoxypropyltrimethoxysilane (0.20%) | 9 | 97 |
| PSA | γ-glycidoxypropyltrimethoxysilane (0.40%) | 9 | 97 |
| PSA | Talc (1.0%) - COMPARATIVE | 50 | 85 |
| PSA | Talc (0.1%) - COMPARATIVE | 148 | 56 |

It will be appreciated that a significant reduction in the surface area of the wire which was covered by contaminants and each example using glycidoxypropyltrimethoxysilane gave equal or enhanced reduction in wire surface coverage when compared to the comparative examples, i.e. there is a large decrease of contaminant (stickies) deposition on the wire when γ-glycidoxypropyltrimethoxysilane is added in a concentration between 0.05 - 0.4% versus dried fibers content in the pulp.

The inventors have found that the addition of the silane and/or polysiloxane additive during the pulping process is preferred for reducing contaminant wire deposition. Additive dosage levels of between 0.02-0.2% by weight of dry paper stock content is sufficient. One major advantage of the present invention is that 0.05wt% of additive in accordance with the present invention provides a similar rate of contaminant reduction as does 1.0% talc, while 0.2w% gives significantly higher rate of reduction, i.e. close to 100% reduction of contaminant. Typically the contaminants and silicon containing materials utilized and not collected on the wire either remain in the resulting paper or are removed in the waste pulping water.

### Example 4 - Wire deposition testing during paper sheet formation: effect of DIP process water

In this example the same process was utilised as described above in Example 2. however pulping was carried out using de-inked pulp (DIP) process water instead of pure distilled water. As can be seen in Table 4 the use of γ-glycidoxypropyltrimethoxysilane (0.2% by weight of dried paper stock) was still very effective for reducing the deposition of contaminants which collected on the wire.

**Table 4**

| Contaminant (1g per 100g of paper) | Additive | Surface Area of wire covered by Contaminant)s (mm²/m² | Reduction of Surface Covered (%) |
|---|---|---|---|
| PSA | None | 390 | 0 |
| PSA | γ-glycidoxypropyltrimethoxysilane (0.2%) | 70 | 82 |

### Example 5 - Wire deposition testing from a pulp: effect combining silane + talc

Addition of approximately 1.0% of talc is a common practice in the paper manufacturing industry for controlling contaminants present in both virgin pulp and pulp derived from wastepaper stock. In the following example (Table 5) we showed that the use of γ-glycidoxypropyltrimethoxysilane (0.1% by weight of dried paper stock) in combination of talc (1% by weight of dried paper stock) was effective for reducing further the deposition of contaminants which collect on the wire.

**Table 5**

| Contaminant (1g per 100g of paper) | Additive | Surface Area of wire covered by Contaminant)s (mm²/m² | Reduction of Surface Covered (%) |
|---|---|---|---|
| PSA | None | 1934 | 0 |
| PSA | Talc (1.0%)-COMPARATIVE | 691 | 64 |
| PSA | Talc (1.0%) + γ-glycidoxypropyltrimethoxysilane (0.1 %) | 382 | 80 |

### Example 6 - Wire deposition testing during paper sheet formation: pH effect during pulping

Variation of pH during pulping may be observed in certain circumstances. Preferably however the paper making process takes place at approximately neutral pH conditions. In a series of examples (Table 6) we have showed that the use of γ-glycidoxypropyltrimethoxysilane (0.2% by weight of dried paper stock) was still effective for reducing the deposition of contaminants which collect on the wire when the pH was made either acidic (acetate buffer, pH 4.6) or alkaline (carbonate buffer, pH 9.8) during the pulping stage as compared to the normal neutral (pH 7) conditions.

**Table 6**

| Contaminant (1g per 100g of paper) | Additive | Surface Area of wire covered by Contaminant)s (mm²/m² | Reduction of Surface Covered vs. absence of silane (%) |
|---|---|---|---|
| PSA | None, pH 7 | 1023 | 0 |
| PSA | γ-glycidoxypropyltrimethoxysilane (0.2%), pH 7 | 551 | 46 |
| PSA | None, pH 4.6 | 306 | 0 |
| PSA | γ-glycidoxypropyltrimethoxysilane (0.2%), pH 4.6 | 170 | 44 |
| PSA | None, pH 9.8 | 220 | 0 |
| PSA | γ-glycidoxypropyltrimethoxysilane (0.2%), pH 9.8 | 143 | 35 |

Other variations may be made in compounds, compositions, and methods described herein without departing from the essential features of the invention. The embodiments of the invention specifically illustrated herein are exemplary only and not intended as limitations on their scope except as defined in the appended claims.

## Claims

1. A method of reducing deposition of stickies during the preparation of recycled paper products and in said products, the method comprising the steps of
a) pulping a wastepaper stock in an aqueous medium and
b) processing pulp produced in step (a) to form recycled paper **Characterised in that** during step(a) and/or step(b) an effective amount of one or more silicon containing material(s) selected from the group of:
i) an epoxy and/or glycidoxy functional silane, and/or
ii) a quaternary ammonium functional silicone polymer, and/or
iii) a quaternary ammonium functional silicone polymer cross-linked by an organic epoxide and/or
iv) an amino functional silane and/or
v) an alkyl functional silane;
is added and interacts with said stickies in the pulp thereby reducing deposition of said stickies on pulp processing equipment and in the resulting paper product.

2. A method according to Claim 1 wherein the silicon containing material comprises epoxy or glycidoxy functional silane (i) selected from the group consisting of 3-glycidoxypropyldimethylethoxysilane, 3-glycidoxypropylmethyldiethoxysilane, 3-glycidoxypropylmethyidimethoxysilane, 3-glycidoxypropyltriethoxysilane, 3-glycidoxypropyltrimethoxysilane, epoxycyclohexylethyltriethoxysilane, epoxycyclohexylethyltrimethoxysilane, and epoxyhexyltriethoxysilane.

3. A method according to Claim 2 wherein the epoxy or glycidoxy functional silane (i) is 3-glycidoxypropyltrimethoxysilane.

4. A method according to Claim 1 wherein the silicon containing material comprises quaternary ammonium functional silicone polymer (iii) that is prepared by reacting:
an organic quaternary ammonium compound having epoxide groups or halohydrin groups in its molecule, with
a siloxane having amino groups in its molecule, in the presence of a surfactant, dispersed in an aqueous polar phase.

5. A method according to Claim 1 wherein the silicon containing material comprises quaternary ammonium functional silicone polymer cross-linked by an organic epoxide (iv), that is prepared by reacting:
an organic quaternary ammonium compound having epoxide groups or halohydrin groups in its molecule, with
a siloxane having amino groups in its molecule, in the presence of a surfactant and
a crosslinking agent dispersed in an aqueous polar phase.

6. A method according to any preceding claim wherein the amount of the silicon containing material used for reducing the deposition of stickies, is 0.01-10 percent by weight based on the dry weight of the paper stock.

7. A method according to preceding claim 6 **characterised in that** at least two silicon containing materials are utilised for reducing the deposition of stickies and the total amount of silanes will be in a range 0.01-10 percent by weight based on the dry weight of paper stock.

8. A method in accordance with any preceding claim wherein the silicon containing material is introduced during pulping (step (a)).

9. A method in accordance with any preceding claim wherein the silicon containing material is introduced during the pulp processing (step (b)).

10. A method in accordance with claim 9 wherein the silicon containing material is introduced during one or more of the following stages in pulp processing (step (b)):
cleaning, Screening, Flotation, Dispersion, Sedimentation, Drying and/or dewatering and any other standard pulp processing stages.

11. A method in accordance with claims 9 or 10 **characterised in that** the silicon containing material is added in stage (b) at an addition point where sufficient shear mixing is applied to enable interaction between the silicon containing material and stickies such that passivation occurs.

12. A method in accordance with any preceding claim **characterised in that** de-inking aids are used for removing the ink during a flotation stage.

13. A method according to any preceding claim **characterised in that** water is either pure demineralized water, or process water extracted during de-inking.

14. A method according to any preceding claim wherein the stickes comprise colloidal, and/or micro- and/or macro-stickies of any size between e.g., 0.1 to 1000 µm.

15. A paper pulp composition derived from wastepaper stock comprising paper fibre and an effective amount, of: a silicon containing material selected from the group of:
i) an epoxy and/or glycidoxy functional silane, and/or
ii) a quaternary ammonium functional silicone polymer, and/or
iii) a quaternary ammonium functional silicone polymer cross-linked by an organic epoxide and/or
iv) an amino functional silane and/or
v) an alkyl functional silane.

16. A paper pulp composition in accordance with claim 15 wherein the silicon containing material comprises epoxy or glycidoxy functional silane selected from the group consisting of 3-glycidoxypropyldimethylethoxysilane, 3-glycidoxypropylmethyldiethoxysilane, 3-glycidoxypropylmethyldimethoxysilane, 3-glycidoxypropyltriethoxysilane, 3-glycidoxypropyltrimethoxysilane, epoxycyclohexylethyltriethoxysilane, epoxycyclohexylethyltrimethoxysilane, and epoxyhexyltriethoxysilane.

17. A paper pulp composition according to Claim 16 wherein the epoxy or glycidoxy functional silane is 3-glycidoxypropyltrimethoxysilane.

18. A paper pulp composition according to any one of claims 15 to 17 wherein the amount of the additive in the pulp is 0.01-10% percent by weight based on the dry weight of paper stock.

19. Paper products made from the paper pulp composition in accordance with any of claims 15 to 18.

20. A method of making paper and/or tissue from paper stock in accordance with any one of claims 1 to 14.

21. A paper and/or tissue product obtainable in accordance with the process in any one of claims 1 to 14.

22. Use of an effective amount, of:
i) an epoxy and/or glycidoxy functional silane, and/
ii) a quaternary ammonium functional silicone polymer, and/or
iii) a quaternary ammonium functional silicone polymer cross-linked by an organic epoxide and/or
iv) an amino functional silane and/or
v) an alkyl functional silane; to reduce the deposition of stickies during the preparation of recycled paper products and in said products.

## Patentansprüche

1. Verfahren zur Verringerung der Ablagerung von klebenden Verunreinigungen bei der Herstellung von Recyclingpapierprodukten, wobei das Verfahren die Schritte umfasst
a) Aufschließen von Altpapiermaterial in einem wässrigen Medium und
b) Verarbeiten des Breis aus Schritt (a) zu Recyclingpapier
**dadurch gekennzeichnet, dass** in Schritt (a) und/oder Schritt (b) eine wirksame Menge eines oder mehrerer sliciumhaltiger Stoffe, ausgewählt aus der Gruppe
i) Epoxy- und/oder Glycidoxy-funktionelles Silan, und/oder
ii) quaternäres Ammonium-funktionelles Silikonpolymer, und/oder
iii) durch ein organisches Epoxid quervernetztes quaternäres Ammonium-funktionelles Silikonpolymer und/oder
iv) Amino-funktionelles Silan und/oder
v) Alkyl-funktionelles Silan;
hinzugefügt wird und mit den klebenden Verunreinigungen im Brei zusammenwirkt, so dass eine Ablagerung der klebenden Verunreinigungen auf den breiverarbeitenden Gerätschaften und dem hergestellten Papierprodukt verringert wird.

2. Verfahren gemäß Anspruch 1, worin der siliciumhaltige Stoff ein Epoxy- und/oder Glycidoxy-funktionelles Silan (i) enthält, ausgewählt aus der Gruppe 3-Glycidoxypropyldimethylethoxysilan, 3-Glycidoxypropylmethyldiethoxysilan, 3-Glycidoxypropylmethyldimethoxysilan, 3-Glycidoxypropyltriethoxysilan, 3-Glycidoxypropyltrimethoxysilan, Epoxycyclohexylethyltriethoxysilan, Epoxycyclohexylethyltrimethoxysilan und Epoxyhexyltriethoxysilan.

3. Verfahren gemäß Anspruch 2, worin das Epoxy- und/oder Glycidoxy-funktionelle Silan (i) 3-Glycidoxypropyldimethylethoxysilan ist.

4. Verfahren gemäß Anspruch 1, worin der siliciumhaltige Stoff ein quaternäres Ammonium-funktionelles Silikonpolymer (ii) enthält, hergestellt durch Reagieren von
einem organischen quaternären Ammoniumstoff mit Epoxidgruppen oder Halohydringruppen im Molekül mit
einem Siloxan mit Aminogruppen im Molekül, in der Gegenwart von einem Tensid, welche in einer wässrigen polaren Phase dispergiert sind.

5. Verfahren gemäß Anspruch 1, worin der siliciumhaltige Stoff ein durch ein organisches Epoxid quervernetztes quaternäres Ammonium-funktionelles Silikonpolymer (iii) enthält, hergestellt durch Reagieren von einem organischen quaternären Ammoniumstoff mit Epoxidgruppen oder Halohydringruppen im Molekül, mit
einem Siloxan mit Aminogruppen im Molekül, in der Gegenwart von einem Tensid und
einem Vernetzungsmittel, welche in einer wässrigen polaren Phase dispergiert sind.

6. Verfahren gemäß irgendeinem vorherigen Anspruch, worin die Menge des siliciumhaltigen Stoffs, der verwendet wird, um die Ablagerung von klebenden Verunreinigungen zu verringern, 0,01 bis 10 Gew.-% auf Basis des Trockengewichts des Papiermaterials ist.

7. Verfahren gemäß dem vorherigen Anspruch 6, **dadurch gekennzeichnet, dass** mindestens zwei siliciumhaltige Stoffe zur Verringerung der Ablagerung von klebenden Verunreinigungen verwendet werden, und dass die Gesamtmenge Silane im Bereich von 0,01 bis 10 Gew.-% auf Basis des Trockengewichts des Papiermaterials ist.

8. Verfahren gemäß irgendeinem vorherigen Anspruch, worin der siliciumhaltige Stoff während des Aufschlussschritts (Schritt (a)) eingeführt wird.

9. Verfahren gemäß irgendeinem vorherigen Anspruch, worin der siliciumhaltige Stoff während des Verarbeitungsschritts (Schritt (b)) eingeführt wird.

10. Verfahren gemäß Anspruch 9, worin der siliciumhaltige Stoff während einer oder mehrerer der folgenden Etappen des Verarbeitungsschritts (Schritt (b)) eingeführt wird: Säubern, Sieben, Flotieren, Dispergieren, Sedimentieren, Trocknen und/oder Entwässern und weitere beliebige übliche Breiverarbeitungsetappen.

11. Verfahren gemäß den Ansprüchen 9 oder 10, **dadurch gekennzeichnet, dass** der siliciumhaltige Stoff in Etappe (b) bei einem Additionspunkt eingeführt wird, bei dem ausreichen Schervermischung angewandt wird, dass ein Zusammenwirken zwischen den siliciumhaltigen Stoff und den klebenden Verunreinigungen ermöglicht wird, so dass es zu einer Passivation kommt.

12. Verfahren gemäß irgendeinem vorherigen Anspruch, **dadurch gekennzeichnet, dass** ein Deinkingmittel eingesetzt wird, um in einem Flotierungsschritt die Tinte zu entfernen.

13. Verfahren gemäß irgendeinem vorherigen Anspruch, **dadurch gekennzeichnet, dass** Wasser entweder pures entmineralisiertes Wasser ist, oder Prozesswasser, das während des Deinkings extrahiert wurde.

14. Verfahren gemäß irgendeinem vorherigen Anspruch, worin die klebenden Verunreinigungen kolloidale und/oder Mikro- und/oder Makro-Verunreinigungen von irgendeiner Größe zwischen z.B. 0,1 und 1000 µm enthalten.

15. Papierbreizusammensetzung, abgeleitet aus Altpapiermaterial, umfassend Papierfasern und eine wirksame Menge eines siliciumhaltigen Stoffs, ausgewählt aus der Gruppe
i) Epoxy- und/oder Glycidoxy-funktionelles Silan, und/oder
ii) quaternäres Ammonium-funktionelles Silikonpolymer, und/oder
iii) durch ein organisches Epoxid quervernetztes quaternäres Ammonium-funktionelles Silikonpolymer und/oder
iv) Amino-funktionelles Silan und/oder
v) Alkyl-funktionelles Silan.

16. Papierbreizusammensetzung gemäß Anspruch 15, worin der siliciumhaltige Stoff ein Epoxy- und/oder Glycidoxy-funktionelles Silan enthält, ausgewählt aus der Gruppe 3-Glycidoxypropyldimethylethoxysilan, 3-Glycidoxypropylmethyldiethoxysilan, 3-Glycidoxypropylmethyldimethoxysilan, 3-Glycidoxypropyltriethoxysilan, 3-Glycidoxypropyltrimethoxysilan, Epoxycyclohexylethyltriethoxysilan, Epoxycyclohexylethyltrimethoxysilan und Epoxyhexyltriethoxysilan.

17. Papierbreizusammensetzung gemäß Anspruch 16, worin das Epoxy- und/oder Glycidoxy-funktionelle Silan 3-Glycidoxypropyldimethylethoxysilan ist

18. Papierbreizusammensetzung gemäß irgendeinem der Ansprüche 15 bis 17, worin die Menge Zusatz im Brei von 0,01 bis 10 Gew.-% auf Basis des Trockengewichts des Papiermaterials ist.

19. Papierprodukte, hergestellt aus der Papierbreizusammensetzung aus irgendeinem der Ansprüche 15 bis 18.

20. Herstellungsverfahren für Papier und/oder Papiertuch aus Papiermaterial gemäß irgendeinem der Ansprüche 1 bis 14.

21. Papier- und/oder Papiertuchprodukt, erhältlich durch ein Verfahren aus irgendeinem der Ansprüche 1 bis 14.

22. Verwendung einer wirksamen Menge
i) Epoxy- und/oder Glycidoxy-funktionelles Silan, und/oder
ii) quaternäres Ammonium-funktionelles Silikonpolymer, und/oder
iii) durch ein organisches Epoxyd quervernetztes quaternäres Ammonium-funktionelles Silikonpolymer und/oder
iv) Amino-funktionelles Silan und/oder
v) Alkyl-funktionelles Silan; zur Verringerung der Ablagerung von klebenden Verunreinigungen bei der Herstellung von Recyclingpapierprodukten und in diesen Produkten.

## Revendications

1. Procédé de réduction du dépôt de contaminants collants pendant la préparation de produits de type papier recyclé et dans lesdits produits, le procédé comprenant les étapes de
a) réduction en pâte d'une matière première de type vieux papiers dans un milieu aqueux et
b) traitement de la pâte produite dans l'étape (a) pour former du papier recyclé
**caractérisé en ce que**, pendant l'étape (a) et/ou l'étape (b), une quantité efficace d'une ou plusieurs substances contenant du silicium choisies dans le groupe de :
i) un silane époxy- et/ou glycidoxy-fonctionnel, et/ou
ii) un polymère de silicone ammonium quaternaire-fonctionnel, et/ou
iii) un polymère de silicone ammonium quaternaire-fonctionnel réticulé par un époxyde organique et/ou
iv) un silane amino-fonctionnel et/ou
v) un silane alkyl-fonctionnel ;
est ajoutée et interagit avec lesdits contaminants collants dans la pâte en réduisant ainsi le dépôt desdits contaminants collants sur l'appareillage de traitement de la pâte et dans le produit de type papier résultant.

2. Procédé selon la revendication 1 où la substance contenant du silicium comprend un silane époxy- ou glycidoxy-fonctionnel (i) choisi dans le groupe consistant en 3-glycidoxypropyldiméthyléthoxysilane, 3-glycidoxypropylméthyldiéthoxysilane, 3-glycidoxypropylméthyldiméthoxysilane, 3-glycidoxypropyltriéthoxysilane, 3-glycidoxypropyltriméthoxysilane, époxycyclohexyléthyltriéthoxysilane, époxycyclohexyléthyltriméthoxysilane et époxyhexyltriéthoxysilane.

3. Procédé selon la revendication 2 où le silane époxy- ou glycidoxy-fonctionnel (i) est le 3-glycidoxypropyltriméthoxysilane.

4. Procédé selon la revendication 1 où la substance contenant du silicium comprend un polymère de silicone ammonium quaternaire-fonctionnel (ii) qui est préparé par réaction :
d'un composé d'ammonium quaternaire organique ayant des groupes époxyde ou des groupes halohydrine dans sa molécule, avec un siloxane ayant des groupes amino dans sa molécule, en présence d'un tensioactif, dispersé dans une phase polaire aqueuse.

5. Procédé selon la revendication 1 où la substance contenant du silicium comprend un polymère de silicone ammonium quaternaire-fonctionnel réticulé par un époxyde organique (iii), qui est préparé par réaction :
d'un composé d'ammonium quaternaire organique ayant des groupes époxyde ou des groupes halohydrine dans sa molécule, avec un siloxane ayant des groupes amino dans sa molécule, en présence d'un tensioactif et
d'un agent réticulant dispersé dans une phase polaire aqueuse.

6. Procédé selon l'une quelconque des revendications précédentes où la quantité de substance contenant du silicium utilisée pour réduire le dépôt de contaminants collants est 0,01-10 % en poids sur la base du poids sec de la matière première de type papier.

7. Procédé selon la revendication 6 précédente **caractérisé en ce qu'**au moins deux substances contenant du silicium sont utilisées pour réduire le dépôt de contaminants collants et la quantité totale de silanes sera dans une plage de 0,01-10 % en poids sur la base du poids sec de la matière première de type papier.

8. Procédé selon l'une quelconque des revendications précédentes où la substance contenant du silicium est introduite pendant la réduction en pâte (étape (a)).

9. Procédé selon l'une quelconque des revendications précédentes, où la substance contenant du silicium est introduite pendant le traitement de la pâte (étape (b)).

10. Procédé selon la revendication 9 où la substance contenant du silicium est introduite pendant un ou plusieurs des stades suivants dans le traitement de la pâte (étape (b)) : nettoyage, tamisage, flottation, dispersion, sédimentation, séchage et/ou déshydratation et tout autre stade de traitement de la pâte standard.

11. Procédé selon la revendication 9 ou 10 **caractérisé en ce que** la substance contenant du silicium est ajoutée au stade (b) à un point d'addition où un mélange par cisaillement suffisant est appliqué pour permettre une interaction entre la substance contenant du silicium et les contaminants collants de sorte qu'une passivation se produit.

12. Procédé selon l'une quelconque des revendications précédentes **caractérisé en ce que** des adjuvants de désencrage sont utilisés pour retirer l'encre pendant un stade de flottation.

13. Procédé selon l'une quelconque des revendications précédentes **caractérisé en ce que** l'eau est de l'eau déminéralisée pure ou de l'eau de procédé extraite pendant le désencrage.

14. Procédé selon l'une quelconque des revendications précédentes où les contaminants collants comprennent des contaminants collants colloïdaux et/ou des microcontaminants et/ou macrocontaminants collants de toute taille entre 0,1 et 1 000 µm, par exemple.

15. Composition de pâte à papier dérivée d'une matière primaire de type vieux papiers comprenant des fibres de papier et une quantité efficace de : une substance contenant du silicium choisie dans le groupe de :
i) un silane époxy- et/ou glycidoxy-fonctionnel, et/ou
ii) un polymère de silicone ammonium quaternaire-fonctionnel et/ou
iii) un polymère de silicone ammonium quaternaire-fonctionnel réticulé par un époxyde organique et/ou
iv) un silane amino-fonctionnel et/ou
v) un silane alkyl-fonctionnel.

16. Composition de pâte à papier selon la revendication 15 où la substance contenant du silicium comprend un silane époxy- ou glycidoxy-fonctionnel choisi dans le groupe consistant en 3-glycidoxypropyldiméthyléthoxysilane, 3-glycidoxypropylméthyldiéthoxysilane, 3-glycidoxypropylméthyldiméthoxysilane, 3-glycidoxypropyltriéthoxysilane, 3-glycidoxypropyltriméthoxysilane, époxycyclohexyléthyltriéthoxysilane, époxycyclohexyléthyltriméthoxysilane et époxyhexyltriéthoxysilane.

17. Composition de pâte à papier selon la revendication 16 où le silane époxy- ou glycidoxy-fonctionnel est le 3-glycidoxypropyltriméthoxysilane.

18. Composition de pâte à papier selon l'une quelconque des revendications 15 à 17 où la quantité d'additif dans la pâte est 0,01-10 % en poids sur la base du poids sec de la matière première de type papier.

19. Produits de type papier produits à partir de la composition de pâte à papier selon l'une quelconque des revendications 15 à 18.

20. Procédé de production de papier et/ou de papier mousseline à partir d'une matière première de type papier selon l'une quelconque des revendications 1 à 14.

21. Produit de type papier et/ou papier mousseline pouvant être obtenu selon le procédé selon l'une quelconque des revendications 1 à 14.

22. Utilisation d'une quantité efficace de :
i) un silane époxy- et/ou glycidoxy-fonctionnel, et/ou
ii) un polymère de silicone ammonium quaternaire-fonctionnel, et/ou
iii) un polymère de silicone ammonium quaternaire-fonctionnel réticulé par un époxyde organique et/ou
iv) un silane amino-fonctionnel et/ou
v) un silane alkyl-fonctionnel ; pour réduire le dépôt de contaminants collants pendant la préparation de produits de type papier recyclé et dans lesdits produits.
